Europäisches Patentamt

(19) European Patent Office   (11) Publication number: **0 321 182**

Office européen des brevets   **A2**

# (12) EUROPEAN PATENT APPLICATION

(21) Application number: **88311778.0**

(22) Date of filing: **13.12.88**

(51) Int. Cl.⁴: **C03B 37/025**

(30) Priority: **14.12.87 US 132518**
 **23.09.88 US 249213**

(43) Date of publication of application:
 **21.06.89 Bulletin 89/25**

(84) Designated Contracting States:
 **AT DE ES FR GB IT SE**

(71) Applicant: **AMERICAN TELEPHONE AND TELEGRAPH COMPANY**
 **550 Madison Avenue**
 **New York, NY 10022(US)**

(72) Inventor: **Shang, Hen-Tai**
 **3673 Corners Way**
 **Norcross Georgia 30092(US)**

(74) Representative: **Johnston, Kenneth Graham**
 **AT&T (UK) LTD. AT&T Intellectual Property**
 **Division 5 Mornington Road**
 **Woodford Green Essex, IG8 OTU(GB)**

(54) Methods of and apparatus for making optical fiber having relatively low absorption loss and product produced thereby.

(57) A method of making an optical fiber which has a relatively low absorption loss, said method comprising the step of exposing successive increments of length of a preform to heat energy which is sufficient to allow optical fiber to be drawn from the successive increments of length, and causing the temperature profile to which the drawn fiber is exposed to decrease in a controlled manner which causes the absorption loss of the drawn cooled fiber to be relatively low.

EP 0 321 182 A2

# METHODS OF AND APPARATUS FOR MAKING OPTICAL FIBER HAVING RELATIVELY LOW ABSORPTION LOSS AND PRODUCT PRODUCED THEREBY

## Technical Field

This invention relates to methods of and apparatus for making an optical fiber having a relatively low absorption loss and the product produced thereby.

## Background of the Invention

In the manufacture of optical fiber, a glass preform rod which generally is manufactured in a separate process is suspended vertically and moved into a furnace at a controlled rate. The preform rod softens in the furnace and optical fiber is drawn freely from a molten end of the preform rod by a capstan located at the base of a draw tower. Because the surface of the optical fiber is very susceptible to damage caused by abrasion, it becomes necessary to coat the optical fiber, after it is drawn, but before it comes into contact with any surface.

One of the most important parameters for an optical fiber is loss. Loss which is expressed in decibels per kilometer (dB/Km) can be caused by absorption of impurities in the glass, or by scattering of the light. Production optical fibers are made of glass which contains impurities, as well as compositional variations. Optical loss can be plotted as a function of the wavelength of light passing through the optical fiber. For silica fibers doped with germania and/or phosphorus, there is a minimum loss at a wavelength of about $1.55\mu m$. The selection of doped silica glass takes advantage of the "window" between infrared molecular vibration absorption and Rayleigh scattering plus ultraviolet absorption regions or "tails".

Rayleigh scattering results from density and compositional variations within the fiber material. Rayleigh scattered energy is absorbed in the cladding and guided in a backward direction. During the processing of optical fiber, it is desired to reduce the impurity absorption loss to zero so that only the loss due to Rayleigh scattering remains. However, other forms of scatter loss may occur and impede the achievement of this goal. One is loss caused by variations in the size of the fiber core. Dimensional variations introduced into production fiber can cause loss by light scattering and influence the quality of a fiber connector or splice because of size differences.

Absorption results when light photons contain sufficient energy to excite electrons of the glass constituent materials. In transparent media of pure silica, the oxygen ions have very tightly bound electrons and only ultraviolet light photons have enough energy to be absorbed. However, the silica in optical fiber includes dopants and transition-metal impurities whose electrons can be excited by lower energy light. Those constituents cause the ultraviolet absorption to be shifted lower and cause additional absorption bands in the visible and near infrared ranges. The amount of loss which is caused by the presence of these impurities depends on their concentration. At certain wavelengths, relatively small concentrations of impurities may cause an increase in absorption loss of about 1 dB/Km.

In addition to the problem of impurity absorption, another problem arises from the presence of the hydroxyl ($OH^-$) ion. The fundamental vibration of this ion occurs at a wavelength of $2.7\mu m$ but overtones at 0.95 and $1.4\mu m$ extend to the priorly mentioned window region. Concentrations of $OH^-$ as low as one part per million can cause losses as high as 1dB/Km at $0.95\mu m$ and 50 dB/Km at $1.4\mu m$. Obviously, it is important to reduce these so-called water peaks to as low a value as possible to achieve the lowest loss in transmission windows around $1.3\mu m$ and $1.55\mu m$.

Low loss silica-rich fibers are made by using silicon tetrachloride ($SiCl_4$) as a precursor material. This material typically is very low in transition-metal ion impurities but may contain substantial amounts of hydrogen-bearing compounds. Because the glass for the fiber is formed in a process by reacting the $SiCl_4$ with oxygen, $OH^-$ can form readily if hydrogen is present. Hence, it is important not only to use precursor materials that are low in hydrogen content, but also to prevent entry of similar compositions into the process or inadvertent contamination by handling.

Optical fiber loss also has been found to depend on conditions during the drawing of the fiber from a preform such as, for example, the temperature of the preform during draw, and the speed at which the fiber is drawn. These last two mentioned conditions also determine the fiber tension during draw. During the drawing of the optical fiber, defects are generated and the number the of defects is dependent on the drawing conditions which of course can cause changes in the loss. However, these defects seemingly are rendered benign if the preform from which the optical fiber is being drawn includes alkalies.

Although the presence of alkalies is helpful in rendering impotent those defects caused during drawing, another problem concerning absorption losses revolves around the use of precursor tubes, the composition of which includes relatively low levels, i.e. about 100 to 0.1 ppm atomic, of alkalies. It has been found that the long term hydrogen effect attributed to the presence of alkalies affects adversely the performance of the optical fiber drawn from a preform which has been manufactured from such a precursor tube. This problem becomes particularly acute when using a so-called rod and tube process in which a preform rod is overclad with a tube to provide a larger preform for draw. During the processing of a substrate tube which includes alkalies in a normal MCVD process, for example, the alkali level somehow is reduced. In the rod and tube process, which is today becoming very popular as a means to save costs, this does not occur and long term hydrogen-related absorption losses will increase.

Because of such adverse effects, efforts have been made to provide precursor quartz tubes which are substantially alkali-free. Surprisingly, it has been found that absorption losses which have been somewhat troublesome in the past may increase substantially when using alkali-free precursor tubes.

What is sought and what does not seem to be provided in the prior art are methods and apparatus which provide an optical fiber having relatively low drawing-induced absorption losses. The sought-after methods and apparatus should be such that they are assimilated easily into existing manufacturing processes and apparatus.

## Summary of the Invention

The foregoing problems of the prior art have been overcome by the methods and apparatus of this invention. A method of making an optical fiber having a relatively low absorption loss includes the step of moving an optical preform incrementally into a device in which the preform is exposed to heat energy and then drawing optical fiber from each successive portion of the preform as it is exposed to the heat energy. Then the temperature of the drawn fiber is caused to decrease in a controlled manner which causes the absorption loss of the drawn fiber to be relatively low.

In a preferred embodiment, the temperature of the drawn optical fiber is caused to decrease gradually to avoid an abrupt change in that parameter which has been commonplace in the prior art. This may be accomplished, for example, by appending a recovery tube to a lower end of a draw furnace or by engaging the drawn optical fiber with a gas at a controlled termperature or both. As a result, the ambient temperature to which the drawn fiber is exposed is controlled toc ause a gradual decrease in the temperature of the drawn fiber prior to it being advanced into the ambient atmosphere of the room in which the drawing apparatus is located.

## Brief Description of the Drawing

FIG. 1 is an overall perspective view of a portion of a manufacturing line on which optical fiber is drawn from a preform and covered with one or more coatings of a polymeric material;

FIG. 2 is an enlarged view of a portion of the apparatus of FIG. 1 together with a view of a graph which shows the temperature profile of a medium through which an optical fiber is advanced during its drawing and during a recovery period following draw;

FIGS. 3 and 4 are graphs which depict losses of single mode fiber at 1310 nm and 1550 nm, respectively, plotted against the water peak loss; and

FIG. 5 is a graph which shows losses including those attributed to ultraviolet and infrared absorption plotted against wavelength.

## Detailed Description

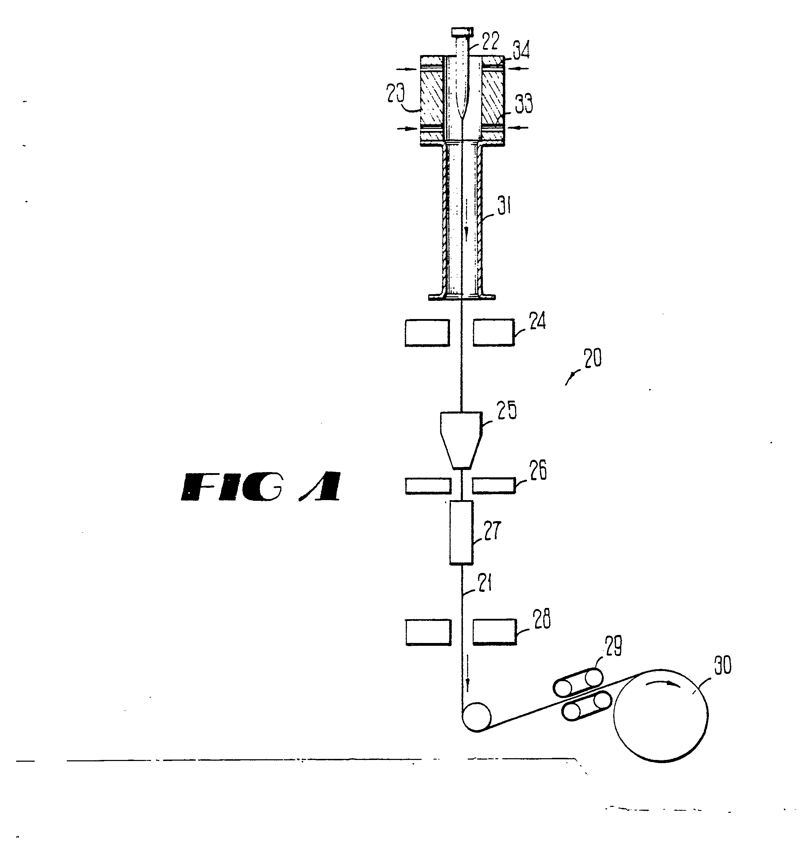

Referring now to FIG. 1, there is shown an apparatus which is designated generally by the numeral 20 and which is used to draw an optical fiber 21 from a specially prepared cylindrical preform 22 and then to coat the optical fiber. The optical fiber 21 is formed by locally and symmetrically heating the preform 22 which typically is about 22 mm in diameter and about 70 cm in length to a temperature in the range of about 2100°-2200° C. As the preform 22 is fed into and through a draw furnace 23, optical fiber 21 is drawn from the molten material.

As can be seen in FIG. 1, the draw apparatus includes the furnace 23, wherein the preform 22 is drawn down to the desired optical fiber size, and optical fiber 21 is pulled from the heat zone. The diameter of the optical fiber 21 which is measured by a device 24 at a point shortly after the furnace 23 becomes an input into a control system. Within the control system, the measured diameter is compared to the desired value and an output signal is generated to adjust the draw speed such that the fiber diameter approaches the desired value.

After the diameter of the optical fiber 21 is measured, a protective coating or coatings is applied by an apparatus 25. Then, after the coated optical fiber 21 is passed through a centering gauge 26, an ultraviolet (UV) device 27 for treating the coating material to cure the coating material and a device 28 for measuring the outer diameter of the coated fiber, it is moved through a capstan 29 and is taken up on a spool 30 for testing and storage prior to subsequent operations or sale. The preservation of the intrinsically high strength of optical fibers is important during the ribboning, jacketing, connectorization and cabling of the optical fibers and during their service lives.

During the time when the optical fiber is being moved through the draw furnace, the fiber is being subjected to heat and tension. As a result, some of the bonds in the glass network are broken and rearranged. Different types of defects can be generated and cause both ultraviolet and infrared absorption losses. As will become clear, it has been found that these bonds may reconnect by using the methods and apparatus of this invention.

Alkalies such as sodium and lithium which were known to be present in the precursor tubes that have been in general use come into play and terminate the broken bonds before the bonds can be reestablished. These elements are active at high temperatures so that during the drawing operation when temperatures of about 2200°C are typical, they diffuse into the optical fiber core from the precursor tube. In the past then, when the precursor tubes were not alkali-free, alkali ions diffused into the fiber core and connected to those broken bonds to alter the defect formation caused during drawing. As a result, the number of active absorption sites were reduced. However, it has been found that the presence of alkali-ions in the drawn fiber increases hydrogen sensitivity and causes unacceptably high losses although only a small amount of hydrogen is present. Molecular hydrogen diffuses into the fiber from the cable or from the ambient environment and reacts with the alkali ion terminated sites to form permanent $OH^-$ bonds which cause these losses. This results in long wavelength, IR absorption losses. In other words, the broken bonds resulting from the drawing operation result in long term hydrogen induced absorption losses which are related to initial alkali levels present within the optical fiber.

In order to overcome this long term hydrogen effect, alkali-free precursor tubes have been sought after and used. Although this solved the long term hydrogen effect, there were no alkali ions to occupy the bonds broken during the drawing operation, and as a result, it has been found that absorption losses increased. The broken bonds resulting from the high temperatures during drawing of the optical fiber from the preform cause absorption losses. These may be referred to as defect related losses.

It has been determined that such increased loss in alkali-free tubes is caused by the thermal shock encountered when the drawn fiber is moved out of the draw furnace into ambient atmosphere prior to it being coated. The thermal shock in effect freezes the defects and allows no recovery from the condition brought on by the relatively high temperature of the draw furnace.

In order to overcome this problem, the drawn fiber must be allowed to recover from the relatively high temperature of the furnace. Should this be done, the defect generation process is reversed and the bonds broken during the dwell time in the furnace are reestablished.

Glass network recovery may be accomplished within the framework of the existing drawing line for fiber with relatively inexpensive modifications. In a preferred embodiment as is shown in FIG. 1, the furnace 23 is provided with a recovery chamber 31 in the form of a tube which is attached to an exit end of the furnace. A seal is provided between the furnace and the recovery tube 31 to prevent the ingress of uncontrolled ambient air into the tube adjacent to the furnace. The ingress of any ambient air at the juncture of the furnace 23 and the tube 31 could prematurely result in a freeze-in of the defect sites with no opportunity for recovery as the fiber traverses the length of the tube. Although the tube 31 is attached to the lower end of the furnace 23 in FIG. 1, it could be spaced therefrom.

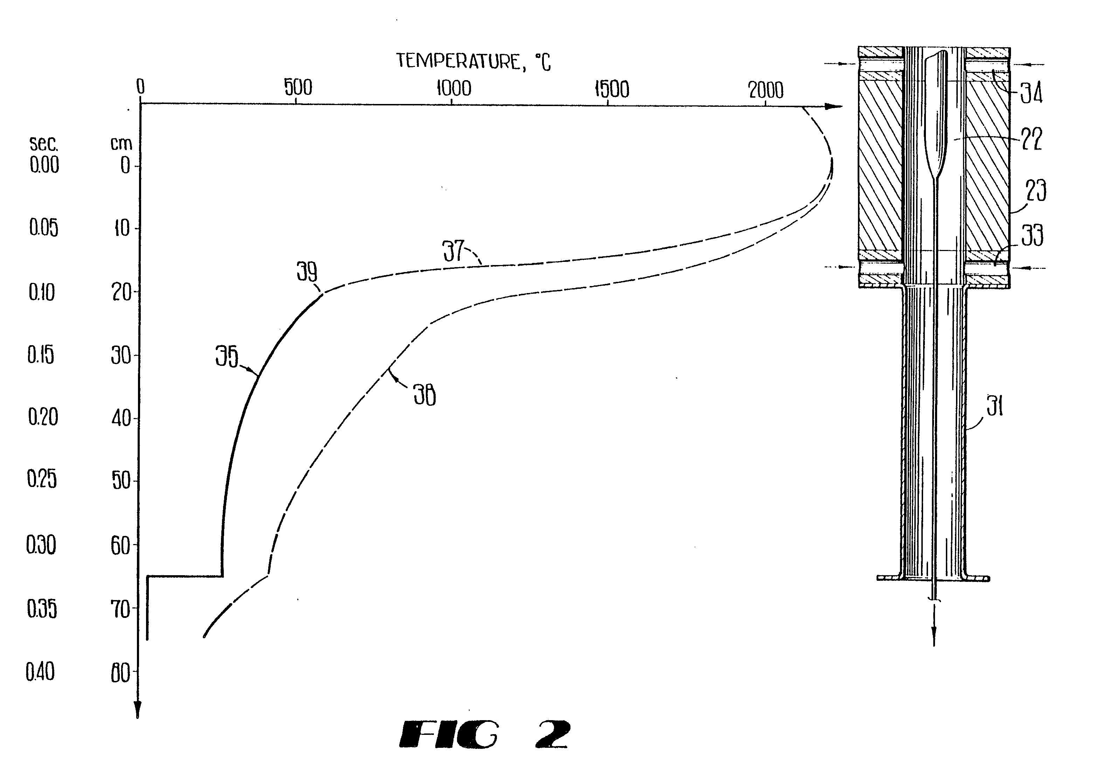

Also, as can be seen in FIGS. 1 and 2, a suitable gas such as, nitrogen or helium, for example, is flowed into the furnace 23 through manifolds 33 and 34 disposed adjacent to an exit and an entrance end, respectively, of the furnace. The portions of the gas which are flowed downwardly are of assistance in controlling the decrease of the temperature of the optical fiber as it is moved through the recovery tube 31 appended to the furnace 23. Further, should a graphite furnace be used, a suitable gas such as helium, for example, is flowed through the manifolds to purge the furnace.

The length of the recovery tube 31 depends on the time during which the drawn optical fiber is exposed to the temperature intermediate that in the furnace and that at ambient. Accordingly, the length of the recover tube depends on the height of the draw tower and the draw speed. In a typical installation, at which the line speed is 2 meters per second, the recovery tube may have a length of about 45 cm and may be made of an aluminum material. Further, the tube may be heated or a gas at an elevated temperature may be flowed into the upper end and/or lower end of the tube to control the temperature profile of the recovery zone.

What is important is that the temperature decrease of the drawn fiber is controlled to avoid abrupt changes. As can best be seen in FIG. 2, a temperature profile 35 to which the fiber is exposed after it leaves the furnace 23 itself is one of gradual change. After relatively high temperatures in the furnace 23 as depicted by portion 37 of the profile 35, the profile then includes a portion 39 which transitions gradually from the high temperatures within the furnace to a temperature somewhat close to room temperature which is referred to herein as ambient. This provides a recovery zone to reverse the defect sites. As can be seen in the temperature profile accompanying FIG. 2, the temperature within the recovery tube 31 adjacent to its lower end is about 200° C.

Another profile 38 which is depicted in FIG. 2 shows the hypothetical temperature of the drawn optical fiber from the time it is drawn from the preform rod until it exits the recovery tube 31. The temperature at the point of draw of the fiber from the rod is approximately equal to the temperature within the furnace which is about 2200° C and the temperature of the fiber as it exits the recovery tube also has been measured. Also of interest in FIG. 2 along the ordinate is a length scale as well as a time scale to indicate at a line speed of 2 meters per second the time required for each fiber section to reach the exit of the recovery tube from the time it was drawn from the rod.

Other temperature profiles may occur depending on the control exercised over the temperature of the optical fiber after it has been drawn. For example, the flow rates of the gas which is introduced into the manifold 33 or the manifold 34 or both may be controlled to adjust the shape of the knee or the transition adjacent to the portion 37.

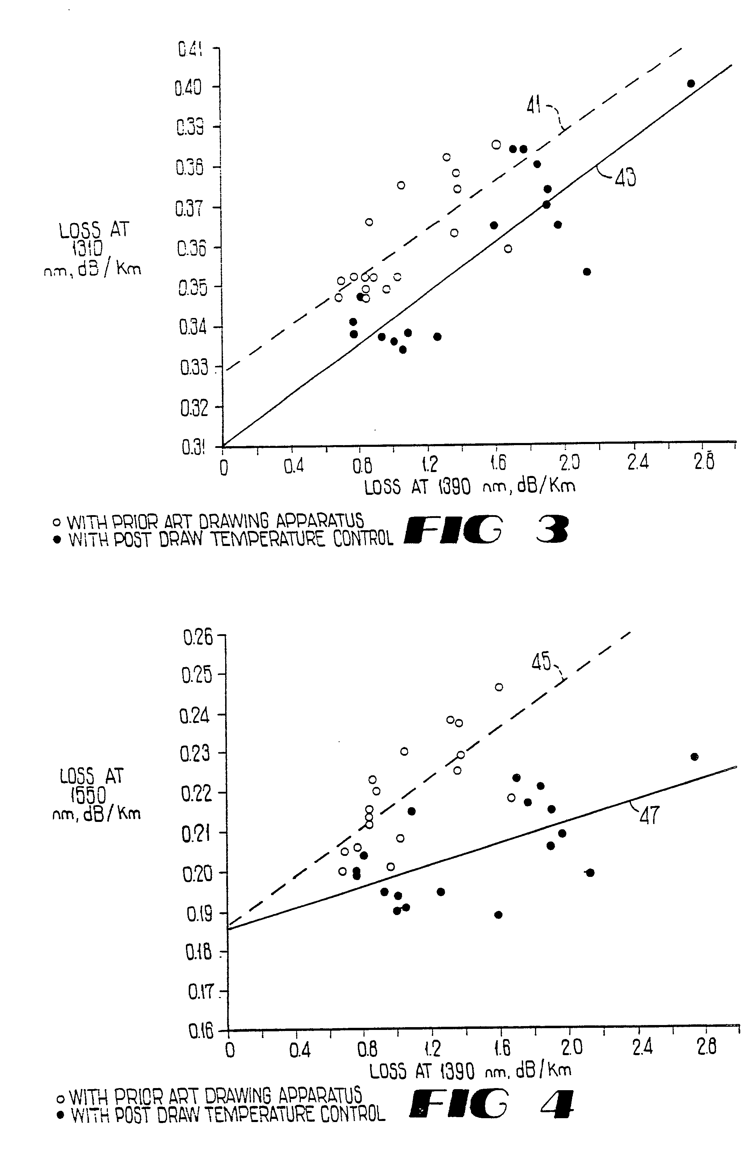

Referring now to FIGS. 3 and 4, there are shown graphs of losses at 1310 nm and 1550 nm versus increasing water peak losses. As can be seen in those figures, the higher the water peak loss, the higher the loss.

The methods and apparatus of this invention reduce losses at both the short and long wavelengths. As can be seen in each of these graphs, the absorption loss in the optical fiber which is drawn in prior art apparatus is substantially greater than that drawn in apparatus which includes means for controlling the temperature of the optical fiber following the drawing process. The difference at 1550 nm is particularly striking inasmuch as the loss difference increases as the typical water peak loss increases.

Viewing now FIG. 3, it is seen that the loss at 1310 nm is depicted by a broken line 41 and is essentially linear over the waterpeak loss at 1390 nm. For a furnace which is provided with an extension recovery tube, the loss is depicted by a solid line 43. As can be seen, the higher the water peak loss, the higher the loss at 1310 nm. Also, at this wavelength, the defect related loss which is the ordinate difference between corresponding abscissa values on the two lines is substantially constant over a range of water peak losses.

Going now to FIG. 4, there is depicted the loss at 1550 nm plotted across a range of water peak losses at 1390 nm. This relationship is shown by a broken line 45. Also plotted on the graph shown in FIG. 4 is a plot of those same two variables with the drawing apparatus being provided with the extension recovery tube to provide post draw temperature control. The relationship under these circumstances is shown by a solid line 47. Unlike the defect related loss at the shorter wavelength of 1310 nm, the defect related loss at 1550 nm is proportional to the water peak loss and increases with an increase in water peak loss.

At the longer wavelength, the loss is related to the concentration of $OH^-$ ions. In the beginning, there is no free hydrogen in the precursor tube. But at higher temperatures, such as are experienced in the draw furnace, $OH^-$ bonds may break and form some hydrogen. During the draw operation, that hydrogen can diffuse into the optical fiber. The broken bonds can rearrange and create loss at long wavelengths. Part of the loss will be one at short wavelengths which is not dependent on the presence or absence of hydrogen.

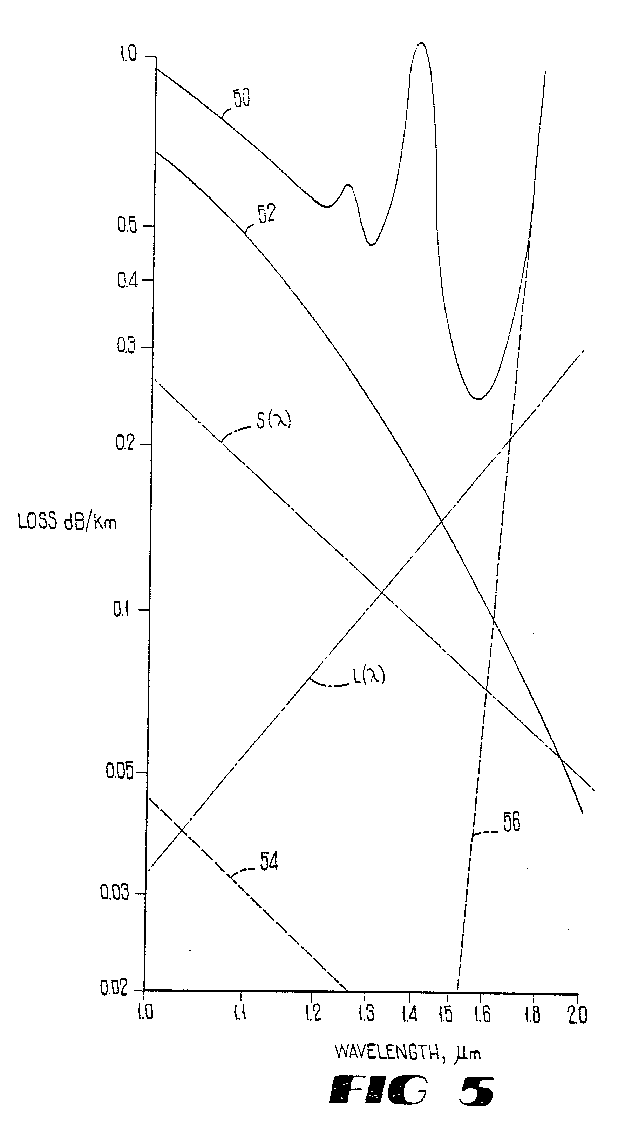

Shown in FIG. 5 is a spectral loss curve 50 for a single mode optical fiber. As can be seen, that curve includes a Rayleigh scattering loss, which by far is most dominant and which is designated by the numeral 52, and losses caused by ultraviolet absorption as well as by molecular vibration absorption. These are designated respectively by the numerals 54 and 56. Additionally, there are shown short and long wavelength losses $S(\lambda)$ and $L(\lambda)$, respectively, which are defect associated losses incurred during drawing of the optical fiber. The values of $S(\lambda)$ and $L(\lambda)$ shown are those incurred without post draw temperature control. The curve designated 50 depicts the total loss.

For optical fiber drawn by the methods and apparatus of this invention, the total loss on the spectral loss curve is less than that for optical fiber drawn in prior art apparatus which does not include facilities for controlling the temperature of the fiber after it has been drawn but before being moved into the ambient environment of the room in which the draw facilities are located. This results from lower short and long wavelength losses.

In the past, persons working in the art seemingly have not recognized these draw related defect losses designated $S(\lambda)$ and $L(\lambda)$. Ideally, only those losses which appear in introductory materials regarding optical fibers such as for example an article entitled "Lightguide Theory and Its Implications In Manufacturing" which appeared in the Winter 1980 issue of the Western Electric Engineer should be present. These include of course, the UV and IR tails of the spectral loss curve. However, experimentally it has been found that higher losses than those predicted from the ideal curve do occur.

For alkali-rich precursor tubes, these effects are reduced. However, as pointed out hereinbefore, alkali-rich tubes have considerable adverse long range effects. For alkali-free tubes, the losses become more prominent. The methods and apparatus of this invention permit the use of alkali-free precursor tubes without incurring the hereinbefore - described disadvantages of doing so.

The methods and apparatus of this invention have been described with respect to a preform which has been made using a precursor tube. It should be understood that preforms manufactured by other processes that do not use a tube will encounter the same problem which is described herein and which may be overcome using the methods and apparatus of this invention.

It is to be understood that the above-described arrangements are simply illustrative of the invention. Other arrangements may be devised by those skilled in the art which will embody the principles of the invention and fall within the spirit and scope thereof.

## Claims

1. A method of making an optical fiber which has a relatively low absorption loss, said method comprising the step of exposing successive increments of length of a preform to heat energy which is sufficient to allow optical fiber to be drawn from the successive increments of length, said method being characterized by the step of:

causing the temperature profile to which the drawn fiber is exposed to decrease in a controlled manner which causes the absorption loss of the drawn cooled fiber to be relatively low.

2. The method of claim 1, wherein the drawn optical fiber is moved through an environment having a controlled temperature prior to its being exposed to ambient air.

3. The method of claim 1, wherein the temperature is caused to decrease in a controlled manner by flowing a gas having a predetermined temperature into engagement with the drawn fiber.

4. The method of claim 1, wherein the drawn fiber is moved through a tubular recovery device prior to being exposed to ambient temperature.

5. The method of claim 4, wherein a suitable gas is caused to be flowed through the tubular recovery device in the same direction in which the optical fiber is moved.

6. An apparatus for making an optical fiber which has a relatively low absorption loss, said apparatus comprising heating means which is capable of raising the temperature of a glassy preform to a temperature at which an optical fiber may be drawn therefrom, moving means for advancing successive increments of length of a glassy preform into said heating means, means for causing an optical fiber to be drawn from the preform and moved out of said heating means, said apparatus being characterized by:

means for causing the temperature to which the drawn fiber is exposed to decrease in a controlled manner, wherein that zone adjacent to the exit end of said heating means is sufficiently close to the temperature of ambient air to prevent an abrupt change in the temperature of the optical fiber which causes the absorption loss of the drawn cooled fiber to be relatively low.

7. The apparatus of claim 6, wherein said means for causing the temperature to which the drawn fiber is exposed to decrease in a controlled manner includes a tubular member which is disposed adjacent to an exit end of said heating means and which is coaxial therewith.

8. The apparatus of claim 7, wherein said tubular member is attached to an exit end of said heating means in such a manner as to prevent the ingress of ambient air into the juncture of said tubular member and said heating means.

9. The apparatus of claim 7, wherein gas having a predetermined temperature is flowed through said tubular member in a direction opposite to the direction in which the fiber is being drawn from the preform.

10. An optical fiber which is produced in accordance with the method of claim 1.

FIG A

FIG 2

FIG 3

○ WITH PRIOR ART DRAWING APPARATUS
● WITH POST DRAW TEMPERATURE CONTROL

FIG 4

○ WITH PRIOR ART DRAWING APPARATUS
● WITH POST DRAW TEMPERATURE CONTROL

EP 0 321 182 A2

LOSS dB/km

WAVELENGTH, μm

FIG 5